# EUROPEAN PATENT APPLICATION

(11) **EP 0 723 152 A2**
(43) Date of publication of application: **24.07.1996**
(21) Application number: 96100228.4
(22) Date of filing: 09.01.1996
(51) Int. Cl.: G01N 30/68, G01N 27/62

(54) **Method and apparatus for detector ignition**

(30) Priority: 23.01.1995 US 376719
(71) Applicant: Hewlett-Packard Company, Palo Alto, California 94304 (US)
(72) Inventor: Rhodes, Robert P., Lincoln University, PA 19352 (US); Degood, John S., Yorklyn, DE 19736 (US)
(74) Representative: Schoppe, Fritz, Dipl.-Ing.

(57) **Abstract**

Method and apparatus for the analysis of one or more analytes present in a sample carried in a first fluid by a flame-based detector (24). Preferably, the flame- based detector (24) is provided in the form of a flame ionization detector, wherein the first fluid is combined with a first detector fluid and a second detector fluid to provide a fluid mixture that is provided to an igniter (211) in the detector according to a control signal from a computer. A detector output signal is provided to a computer (22) and flame ignition is attempted during an ignition sequence that is effected according to a comparison of the detector output signal level to predetermined value so as to facilitate flame ignition. An attempt at ignition that is unsuccessful (ignition failure) is recorded and in the event the number of recorded attempts exceeds a predetermined value, the detector is placed in a shutdown mode. Power to the igniter (211) is provided according to a control signal from the computer (22) to an igniter circuit (115). The circuit (115) includes a power supply and a power converter for isolating the igniter from power supply deficiencies.

## Description

### Field of the Invention

The present invention relates generally to gas chromatography, and in particular to the operation of a flame-based detector.

### Background of the Invention

Flame-based detectors are used in the field of chromatography for the detection of specific constituent components (i.e., analytes) of a sample that are present in a first fluid stream. Two examples of such detectors are the flame ionization detector (FID) and the flame photometric detector (FPD).

Flame ionization detectors operate by burning the material to be analyzed so as to form ions. When used with a gas chromatograph, the first fluid is eluted from a separation column and mixed with one or more detector fluids such as a flammable gas and passed through a jet. An energy source, such as an electrical heating current carried by a resistive heating wire embedded in the igniter, heats the fluid mixture to an ignition condition, whereupon a flame is established. A second detector fluid, typically air, is introduced at the periphery of the jet so as to form a stable flame when the jet is ignited. A collector tube is positioned adjacent the jet, and an electrometer is connected in a circuit with the collector and the jet so as to collect the ions formed in the flame. A current is produced for measurement by the electrometer in proportion to the rate at which the ions are collected.

Successful ignition of the flame can be problematic, especially during high flow rates of any of the fluids that combine to form the fluid mixture. Even repeated attempts at ignition (thus, re-ignition) can be unsuccessful at times when the operating conditions of the chromatograph are only marginally suitable for ignition. Ignition and re-ignition are manually performed using a push-button control, valve manipulations, etc. The operator typically must make repeated attempts at ignition before successful ignition occurs, and does so without knowledge of the optimal the conditions for ignition. The resulting ignition procedure can be significantly longer and more arduous than is acceptable.

Apparatus for providing automation of flame ignition has been disclosed; see, for example, U.S. Patent 4,346,055. However, in the disclosed approach, a flame lit condition is determined by sensing the resistance of the igniter filament or the temperature downstream of the igniter. Under some conditions, the flame may become sufficiently hot to cause a false reading, and a flame unit condition may be erroneously determined.

Furthermore, in other conventional approaches, neither the operator nor the automation apparatus is aware of the flame condition, and the operator is forced to insert some object in the flame path to determine if there is an accumulation of condensation on the object, thus (presumably) indicating that flame is lit. Such an approach is cumbersome and inaccurate, and is not amenable to integration in an automated re-ignition sequence.

The aforementioned drawbacks are even more bothersome during an attempt to re-ignite a detector during a flame-out condition that has arisen during an unattended operation of the chromatograph. For example, the loss of a flame during an analytical run requires an immediate re-ignition in order to achieve a quick resumption of the operation of the detector. Otherwise, the results from a significant amount of the analytical run will be compromised.

In another drawback in conventional practice, the igniter is typically powered by a power supply that can be subject to variations in the input voltage of its supply line, or in the load that is placed on the output line of the power supply, or both. During certain operating conditions, especially during a decline in the supply line voltage, the power supplied to the igniter from the power supply can be insufficient to light a flame.

### Summary of the Invention

This invention provides a method and apparatus for an improvement in the flame-based detection of one or more analytes in a sample.

In a first preferred method and apparatus, the invention provides for the analysis of one or more analytes present in a sample carried in a first fluid by a flame-based detector. Preferably, the flame-based detector is provided in the form of a flame ionization detector (FID), wherein the first fluid is combined with a first detector fluid and a second detector fluid to provide a fluid mixture that is provided to an igniter in the detector according to a control signal from a computer. A detector output signal is provided to the computer and flame ignition is attempted during an ignition sequence that is effected according to a comparison of the detector output signal level to predetermined value so as to facilitate flame ignition.

In a second preferred embodiment of the present invention, the flame-based detector is provided in the form of a flame photometric detector (FPD).

In a third preferred embodiment of the present invention, an analytical instrument for detecting the presence of an analyte in a first fluid may be constructed to include a pneumatic manifold for providing a selectable flow of at least one of a plurality of fluids; a pneumatic controller, responsive to a first control signal, for causing said selectable flow; a flame-based detector, operably connected to the pneumatic manifold for receiving the selectable flow, that includes an igniter for igniting the selectable flow; an igniter circuit for powering the igniter in response to a second control signal; and a programmable computer for providing said first and second control signals in a predetermined ignition sequence so as to effect said modulation according to a determination relevant to the detector output signal level that facilitates ignition.

In a fourth preferred embodiment of the present invention, power to the igniter is provided an igniter circuit that includes a power supply and a power converter for isolating the igniter from power supply deficiencies.

In a fifth preferred embodiment of the present invention, an attempt at ignition that is unsuccessful (ignition failure) is recorded in the computer and, in the event the number of recorded attempts exceeds a predetermined value, the detector is placed in a shutdown mode.

### Brief Description of the Drawings

Figure 1 is simplified schematic representation of a chromatograph constructed according to the present invention.

Figure 2 is a simplified schematic of an igniter power circuit provided in the chromatograph of Figure 1.

Figure 3 is a representation of successive steps that are employed in an ignition sequence operable in the chromatograph of Figure 1.

### Detailed Description of the Preferred Embodiments

The apparatus and methods of the present invention may be employed in particular to improve the detection of an analyte that may be present in a variety of fluids. Gases are the preferred fluids according to the practice of the present invention, and therefore the following description of the invention will include a description of the arrangement, construction, and operation of pneumatic devices, and is directed to the control of a plurality of gaseous streams in a detector in a gas chromatographic analytical system (hereinafter, a chromatograph). However, for the purposes of the following description, the term "pneumatic" will also be considered to refer to all types of fluids.

Further examples that are particularly benefited by use of the present invention include supercritical fluid chromatography and high-pressure gas chromatography (HPGC). However, it should be understood that the teachings herein are applicable to other analytical instruments, including clinical analyzers, flow-injection analyzers, and laboratory water purification systems.

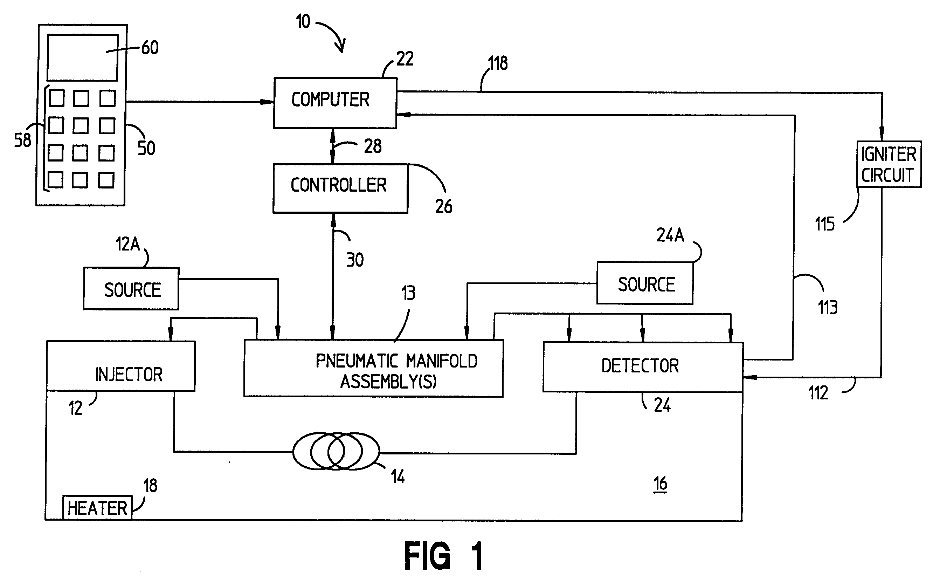

A new and novel analytical instrument is shown in Figure 1 and is generally designated chromatograph 10. In the preferred embodiment, the chromatograph 10 is a Hewlett-Packard HP6890 gas chromatograph. In order to perform a chromatographic separation of a given sample compound, a sample is injected with a pressurized carrier gas by means of an injector 12. The carrier gas supplied to injector 12 is provided from a source 12A through one or more pneumatic manifold assemblies 13, each of which serves in part to control and redirect a plurality of gas flows, including the carrier gas and a plurality of detector gases of appropriate types, such as air, hydrogen, and make-up gas. The detector gases are provided from respective sources (one such source 24A is shown) to the pneumatic manifold assembly 13. Suitable fluid-handling devices such as valves, sensors and the like in the pneumatic manifold assembly 13 are operated under the control of the computer 22 by way of control signals provided on a data and control lines 28, 30. For example, the pneumatic controller 26 effects control of, among other things, fluid flow rate, fluid pressure, fluid flow regulation, and the continuity or discontinuity of flow. As further example, the time during which a particular valve in the pneumatic manifold assembly 13 will remain open and dosed in relation to control signals received on the data and control line 28 and in accordance with certain operating conditions of the chromatograph 10. The control and data line 30 also allows the return of sense information from suitable sensors and signal-interface electronics that are provided in the pneumatic manifold assembly 13. Accordingly, the computer 22, pneumatic controller 26, and pneumatic manifold 13 may be operated to effect a modulation of any of the aforementioned gas flows, either individually or in combination.

A column 14 is positioned within an oven 16. The carrier gas/sample combination passing through column 14 is exposed to a temperature profile resulting in part from the operation of a heater 18 within oven 16. During this profile of changing temperatures, the sample will separate into its components primarily due to differences in the interaction of each component with the column 14 at a given temperature. As the components exit column 14 they are detected by a flame-based detector (hereinafter, detector) 24.

Computer 22 maintains overall control of all systems associated with gas chromatograph 10. It will be recognized that any particular gas chromatograph may include more systems than those described in relation to the present invention. It will also be understood that although computer 22 is shown as a single block, such computer includes a central processing unit and all associated peripheral devices, such as random access memories, read-only memories, input/output isolation devices, clocks and other related electronic components. In the preferred embodiment, the central processor used in computer 22 is a microprocessor. As such, computer 22 includes a memory in which information and programming can be stored and retrieved by known methods. However, it will be appreciated that the programmed control of pneumatic controller 26 can be implemented by other computing means, such as an embedded microprocessor or dedicated controller circuit incorporated in the pneumatic controller 26. Also, the programming associated with computer 22 that is utilized in relation to the present invention will be readily understood from the description herein.

An electronic control panel 50 is shown to include at least two main input/output components, namely a keypad 58, and a display 60. By monitoring the operation of the chromatograph 10 via signals from certain components, such as the detector 24, the computer 22 can initiate and maintain certain functions required for an analytical run. Consequently, indicating or prompt messages can be generated by computer 22 and displayed on display 60. Operating commands and other information are entered into computer 22 by way of keypad 58. One particular data type is detector ignition setpoint values and one particular operating command is a detector ignition command, both of which may be prompted by messages displayed on display 60 and the requisite command or data are entered through keypad 58. Another particular type of data is a detector ignition lit offset value, which may be acknowledge by messages displayed on display 60 and modified by commands and data entered through keypad 58. The ensuing ignition sequence which relates to the present invention is then automatically provided under control of the computer 22 as described below in reference to Figure 5.

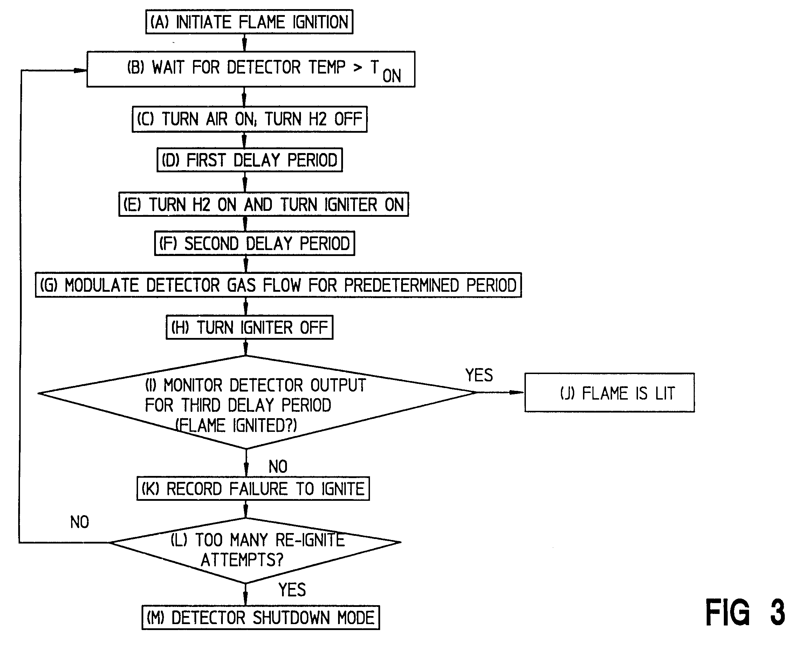

The computer 22 controls the flow of the make-up fluid, the first fluid, the first detector fluid, and the second detector fluid by transmitting an appropriate signal to the pneumatic controller 26, which in turn provides respective signals to a respective valve in the pneumatic manifold assembly 13 to increase or decrease the amount of fluid flowing therethrough to the detector 201. In particular, the fluid flow control in the embodiment illustrated in Figure 3 is preferably provided via electronic pneumatic control (EPC). For further details of electronic pneumatic control techniques, one may consult, for example, Klein, et al., U.S. Patent No. 4,994,096 and United States Patent No. 5,108,466, the disclosures of which are incorporated herein by reference.

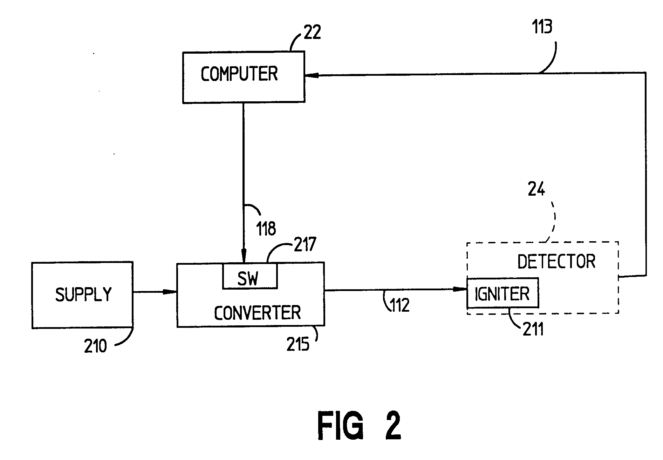

As shown in Figure 2, a first preferred embodiment of a detector 24 is preferably constructed as either an FID or a FPD suited for operation in either an EPC or a non-EPC configuration. The preferred embodiment includes an igniter 211, an ignition line 112, and an output signal line 113. An electronic igniter circuit 115 provides a controlled amount of electrical current or voltage on the ignition line 112 in response to a control signal on a control line 118 to cause a selectable amount of heat in the igniter 211. In response, the fluid flow in the detector 24 achieves an elevated temperature and is ignited. Upon ignition, the signal output line 113 provides an output signal that represents the presence of an analyte of interest. For example, in one embodiment, wherein the detector 24 is constructed as a FID, the signal output line is provided from an ion current measurement device (not shown) such as an electrometer which is used to measure the magnitude of ionization current to provide a signal to the computer 22 that is representative of a chromatogram.

In particular, and in accordance with one feature of the present invention, the computer 22 controls the ignition in the detector 24 according to an automated ignition sequence, as will be described below. Accordingly, a power supply 210 provides power to a power converter 215. Preferably, the chromatograph 10 includes a power supply 210 preferably in the form of a mainframe power supply that supports a plurality of the power needs of the chromatograph 10, whereas the power converter 215 is provided as a switched-mode power converter. The power converter 215 may be constructed as known in the art to achieve highly efficient power conversion while isolating the igniter from the loading and/or power line problems, such as a low line condition, that may affect or be present in the power supplied by the mainframe power supply 210. The power converter 215 includes a switch input 217 that allows the control signal on control line 118 to activate and deactivate the current supplied to the igniter on ignition line 112.

In the preferred embodiment of the computer 22, the procedures necessary to set up or operate chromatograph 10, to enable a particular gas chromatographic separation test or analytical run, are automated. The contemplated automation allows the operator to program events using programming via a table of fluid flow setpoints, a run table, and by clock time programming. A plurality of timed events may be programmed in each run table for execution during an analytical run. Run time programming allows certain setpoints to change automatically during a run as a function of the chromatographic run time. For example, an event such as detector ignition may be programmed to occur prior to injection. Such programming is contemplated as being applicable to the switched operation of the power converter 215, and particularly to the control of the current supplied to the igniter 211 in certain portions of an ignition sequence as will be now be described with respect to Figure 3.

Certain programmed steps effected by computer 22 in controlling the operation of the pneumatic controller 26 and the power converter 215, which relate to and are in accordance with the present invention, are illustrated in the flame ignition sequence shown in Figure 3.

In the preferred embodiment, the operator may enter data regarding the operation of the detector 24 and the pneumatic controller 26 into the computer 22 by use of the keypad 58. The computer 22 operates to store the entered information into memory. The data thus entered may include one or more commands that are to be implemented immediately, or if necessary, the entered data may be stored in the form of one or more detector control tables for later access. In the preferred embodiment, a flame ignition may be requested by the operator by use of a table or directly by entry of an ignition command.

As shown in Figure 3, initiation of the ignition sequence is effected as a first step (A) in programmed ignition sequence under the control of the computer 22. The step (A) of initiating the flame ignition sequence includes performing a measurement of the detector output signal level while no fluid mixture is provided to the detector. This reference output signal level is stored for later reference. Then, in step (B) the detector temperature is checked for a level in excess of a predetermined setpoint value ( T_{ON} ) which is preferably 150 degrees Centigrade. When the detector temperature is considered to be adequate for operation, the sequence proceeds to step (C), wherein the hydrogen gas supplied to the detector is turned off while air flow is turned on, to purge the detector during in a first delay period (step (D)). In step (E), the hydrogen flow is resumed, and the power converter 215 is switched on, thus activating the igniter 211. After step (F), which includes a second delay period to allow the igniter to assume a requisite temperature, step (G) provides for modulation of one or more detector gas flows, such as hydrogen. In step (H), the igniter is deactivated by turning the power converter output off. If ignition has been successful, there will be a flame present in the detector 24. In step (I), the actual detector output signal level is monitored for the duration of a third delay period and compared to the reference detector output level taken in step (A). In the preferred embodiment, each of the first and second delay periods are approximately 2-3 seconds, and a third delay period is approximately 3-5 seconds.

A predetermined value, preferably provided in the form of a lit offset value, is retrieved from memory. The lit offset value is the expected minimum difference between the reference detector output signal and the actual detector output signal levels that is predetermined to be sufficient to indicate a flame lit condition. (The lit offset value may be specified by the user prior to the ignition sequence by way of a detector configuration sequence that is accessed using the keyboard 58; a preferred default value is 2.0 picoamps.) The difference between the reference detector output signal and the actual detector output signal level is compared to the lit offset value. If the difference exceeds the lit offset value, the flame is determined to be lit, and the sequence ends at a step (J). If the difference does not exceed the lit offset value, the ignition attempt is determined to have failed, and in step (K) the failure is recorded in memory. In step (L), a comparison of the number of the ignition attempts that were recorded since the initiation step (A) is compared to a predetermined value. This comparison allows the computer 22 to determine if too many attempts have been made. If so, a fault condition is realized and the sequence ends at step (M) wherein the detector is placed in a shutdown mode. If not, the control of the ignition sequence is returned to step (B).

Hence, in a departure from the prior art, and according to a particular feature of the present invention, the detector output signal level is used by the computer to determine if the flame is present, and to effect particular steps in the ignition sequence accordingly.

In another departure from the prior art, and according to a particular feature of the present invention, the difference between the detector output signal and a reference output signal level is compared to a lit offset value to determine if the flame is present.

In another departure from the prior art, and according to a particular feature of the present invention, successive ignition failures are recorded and if too many failures have occurred, a detector shutdown mode is implemented.

In another departure from the prior art, and according to a particular feature of the present invention, the ignition of the igniter is provided under automated control of a power converter, so as to isolate the igniter from any power supply deficiencies, and thereby facilitate a successful ignition.

In summary, the desired result of a flame in the detector may be automatically effected according to the above-described ignition sequence, in a reliable and effective manner that does not generally require any intervention, attention, or other actions by the operator, thereby ensuring a reliable flame ignition in an automated sequence.

With respect to step (G), it will be appreciated that both the flow rate and the composition of the fluid mixture that passes the igniter 211 will determine the success or failure of the ignition mechanism that occurs at the igniter 211. A particular mode of modulation of the flow of at least one of the detector fluids during an ignition sequence has been found to facilitate detector ignition. In the preferred embodiment, either the air flow rate or the hydrogen flow rate is modulated during a portion of the ignition sequence. Further details of the contemplated flow modulation may be found in a co-pending European Patent Application of the same applicant entitled "FLOW MODULATION FOR FACILITATING DETECTOR IGNITION" and claiming the priority from USSN 08/376717,
filed concurrently herewith, the disclosure of which is included herein by reference.

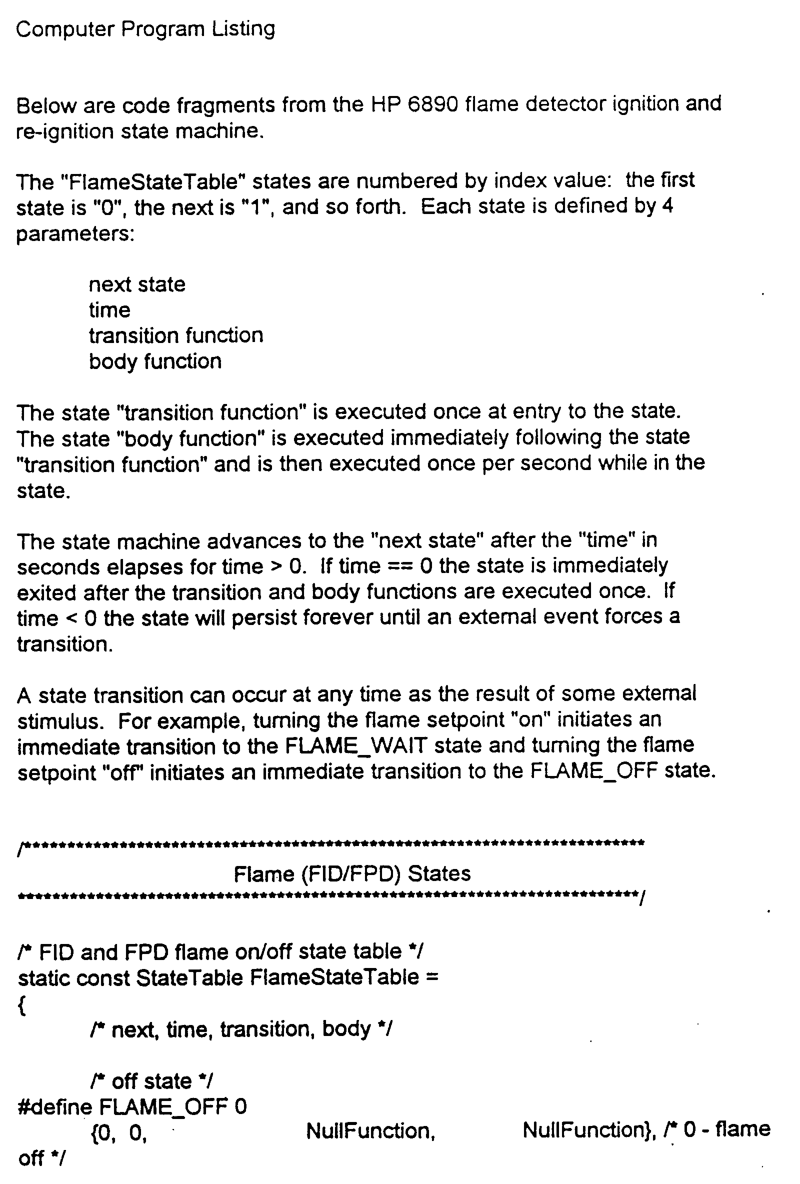

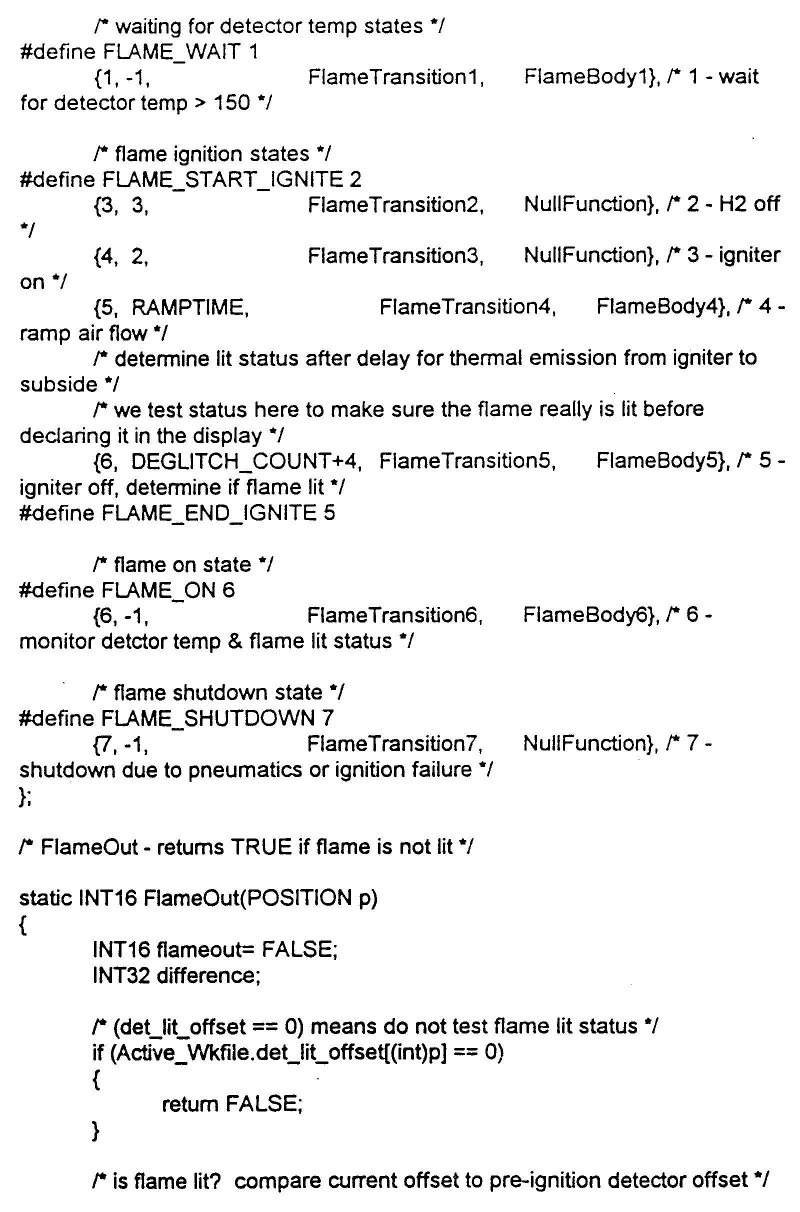

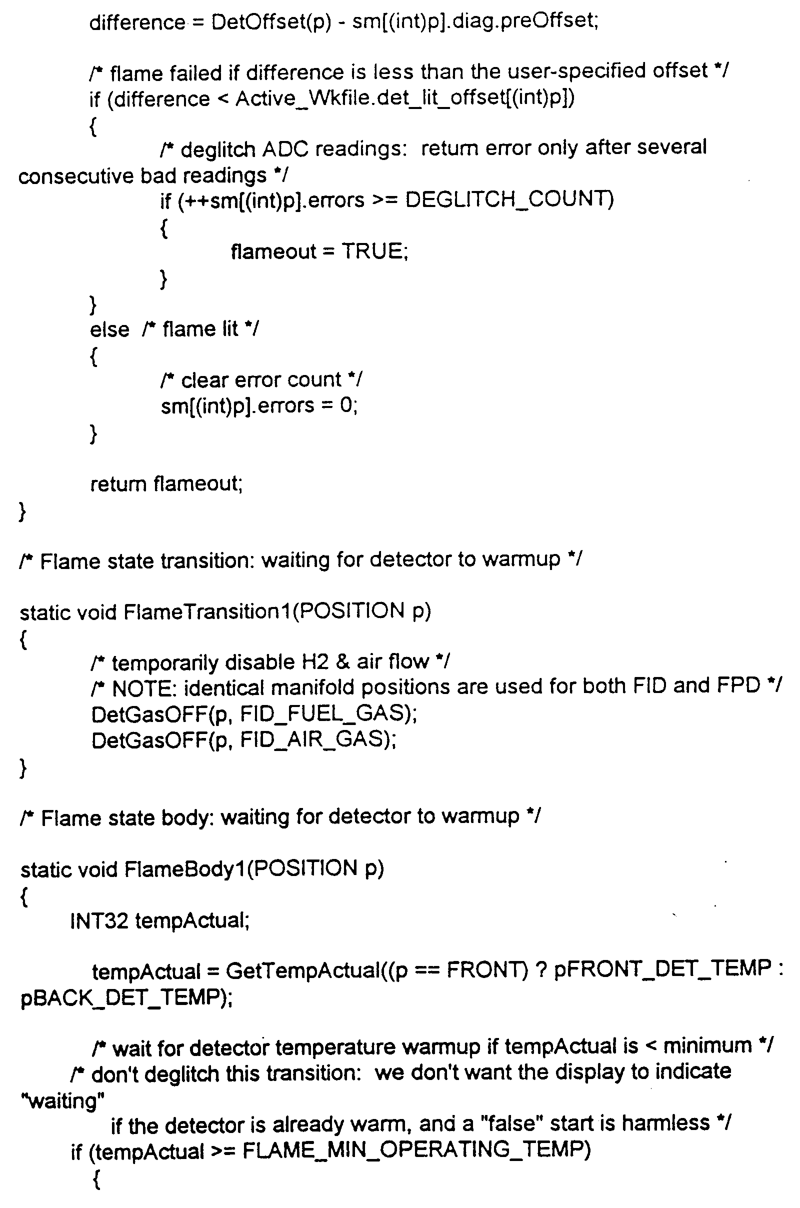

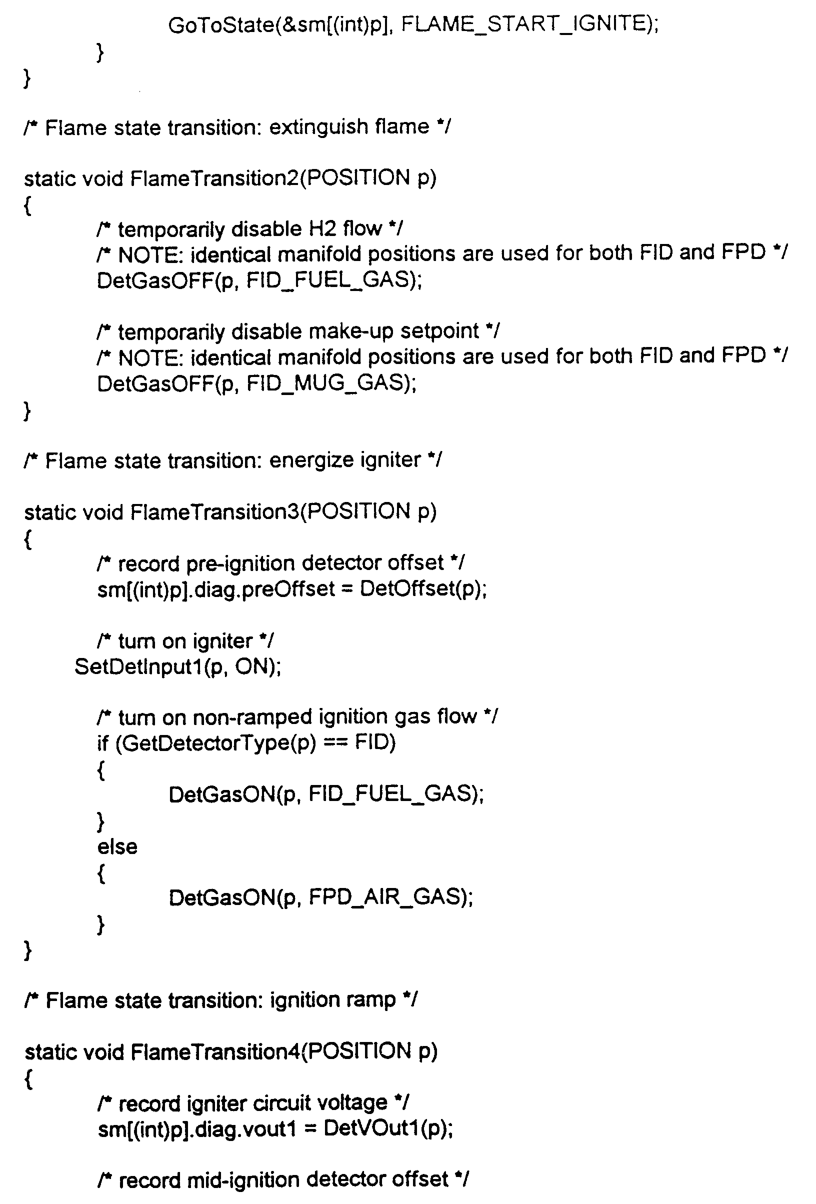

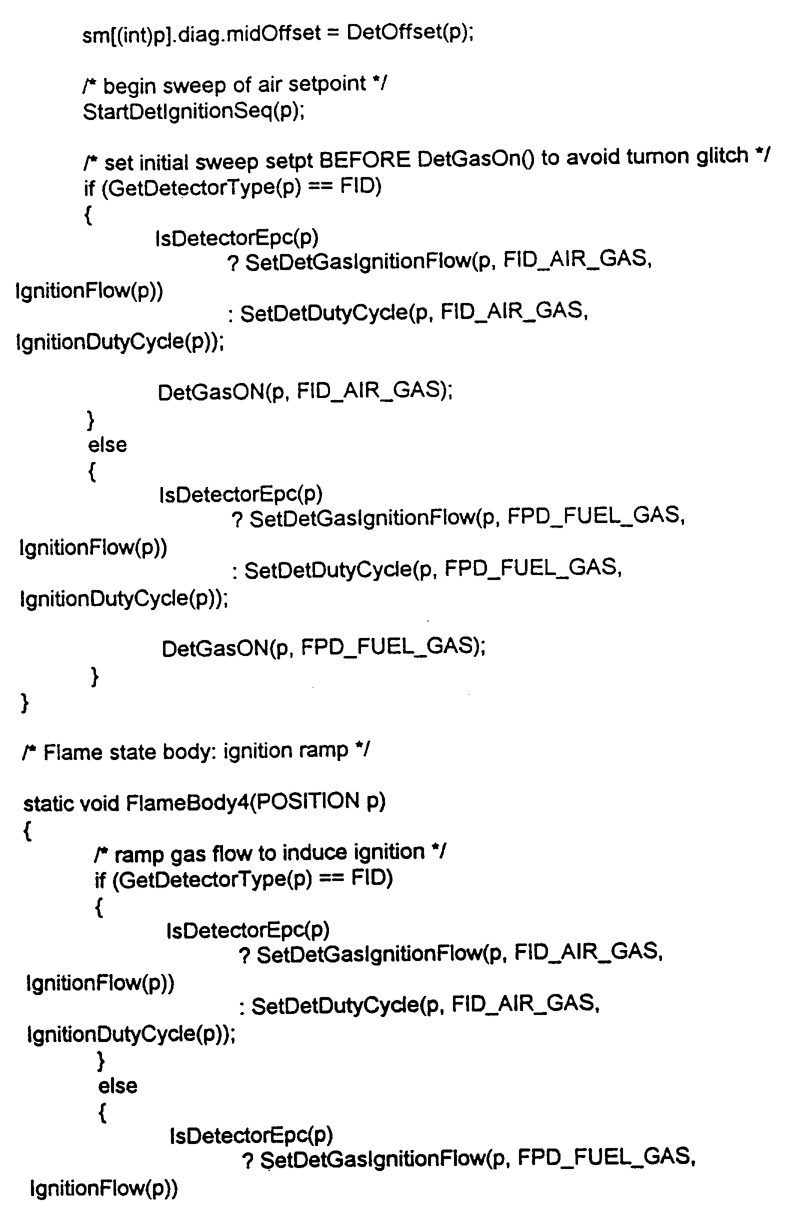

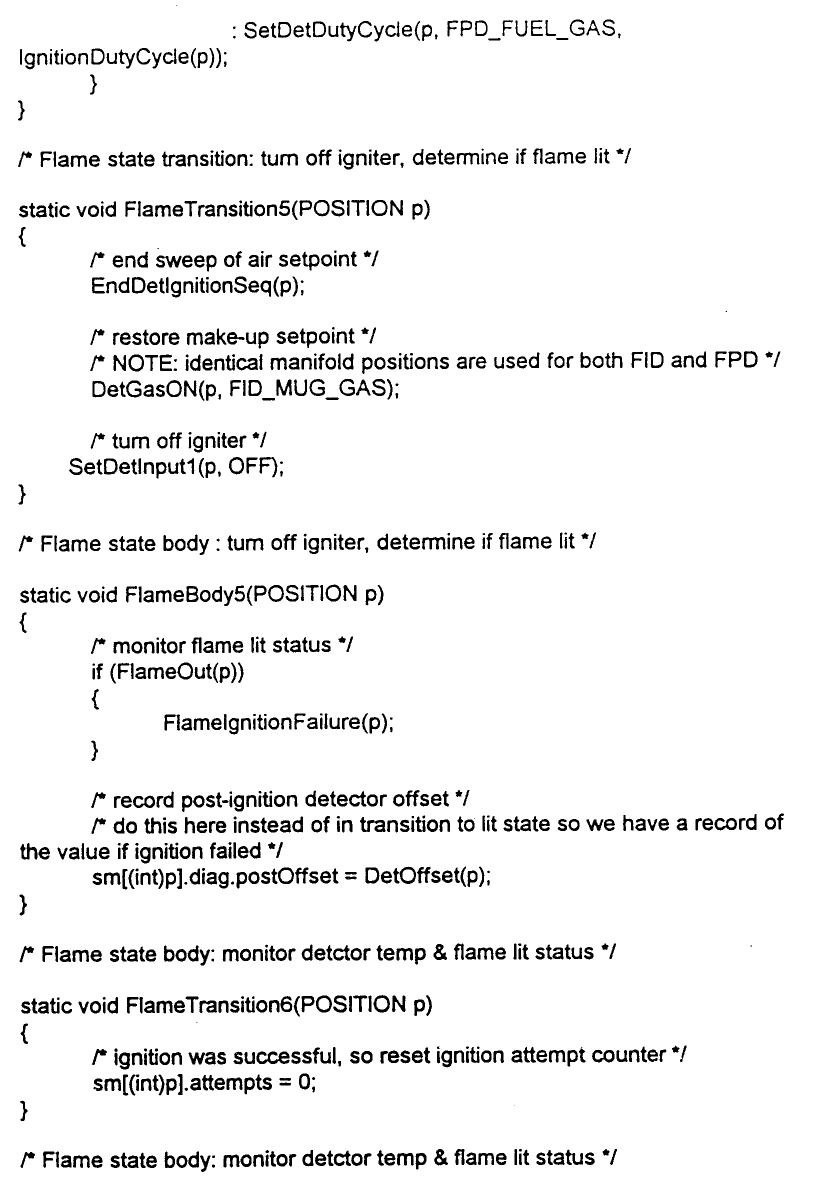

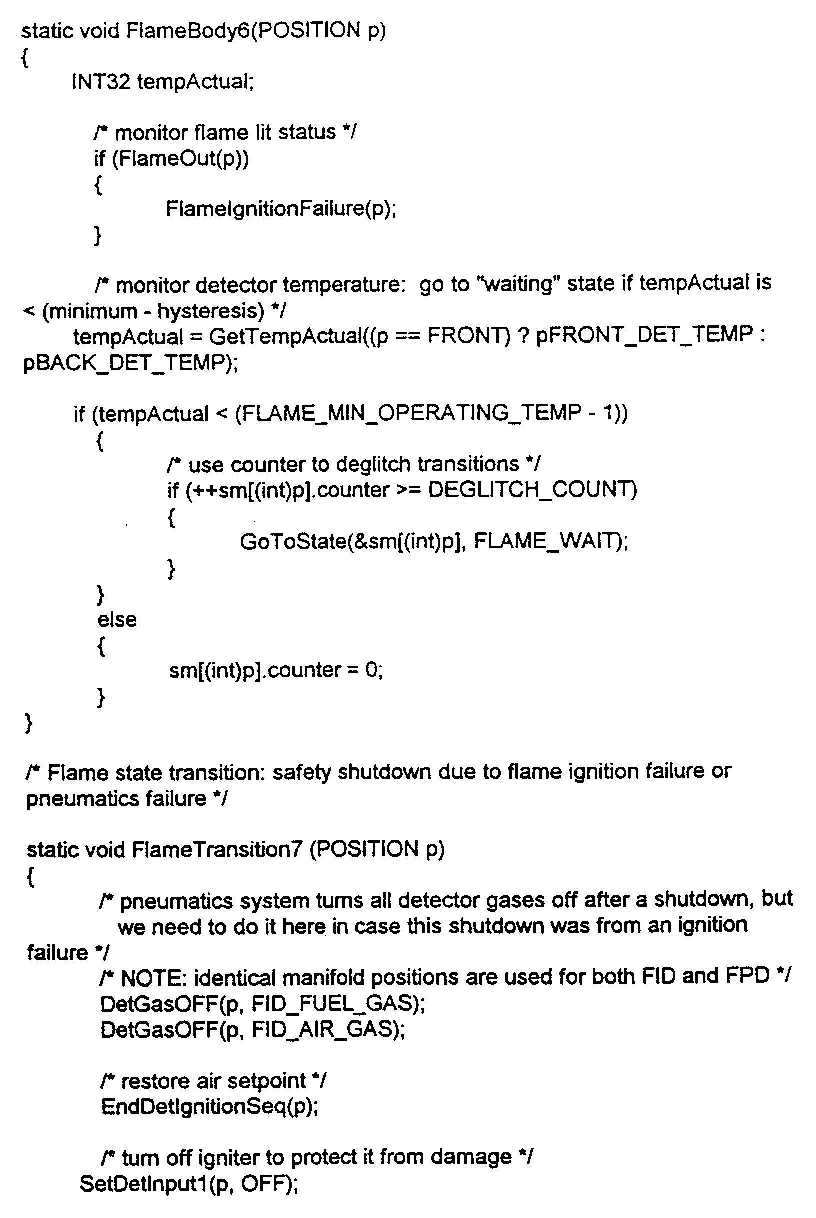

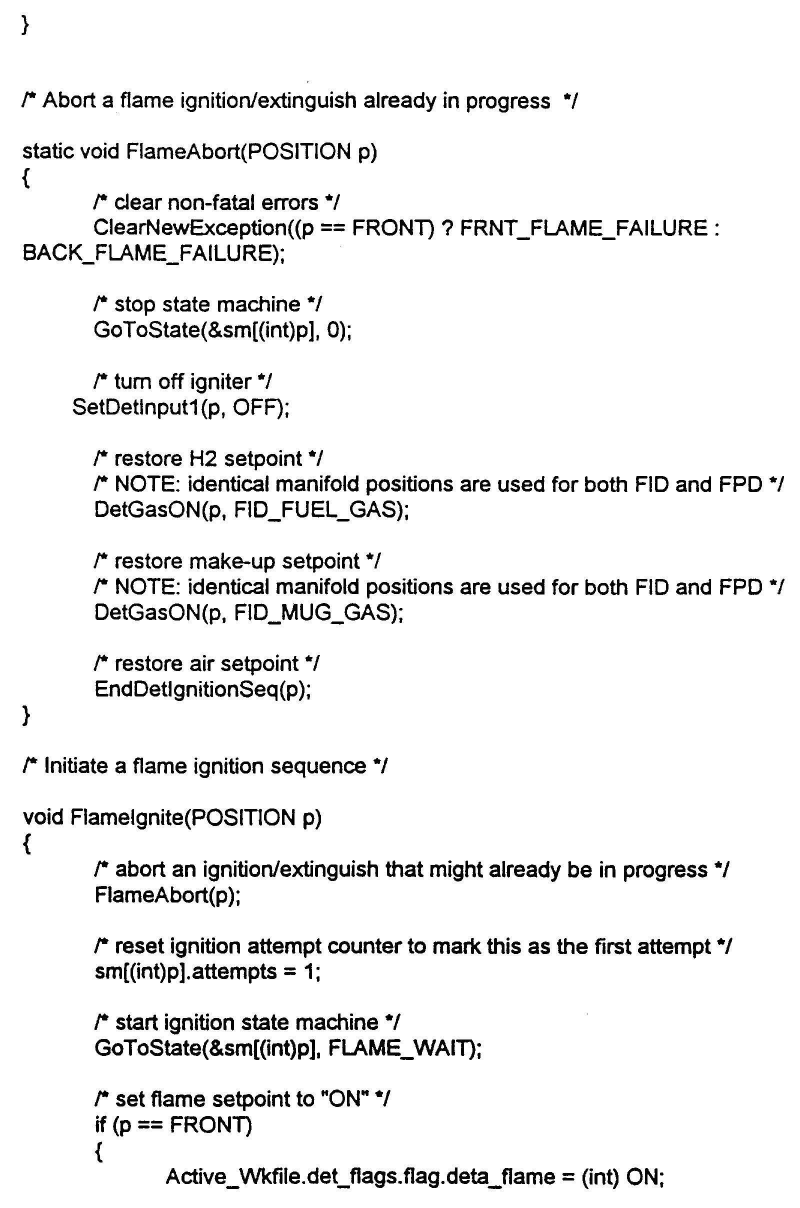

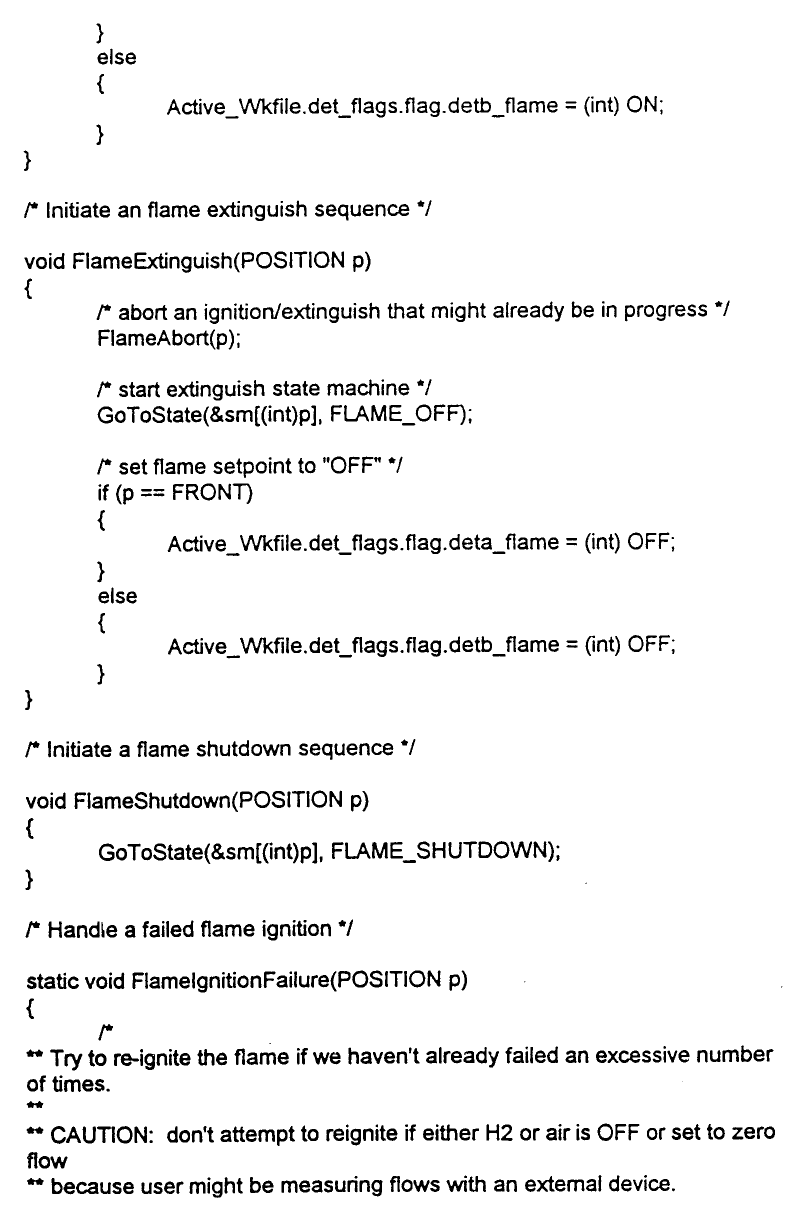

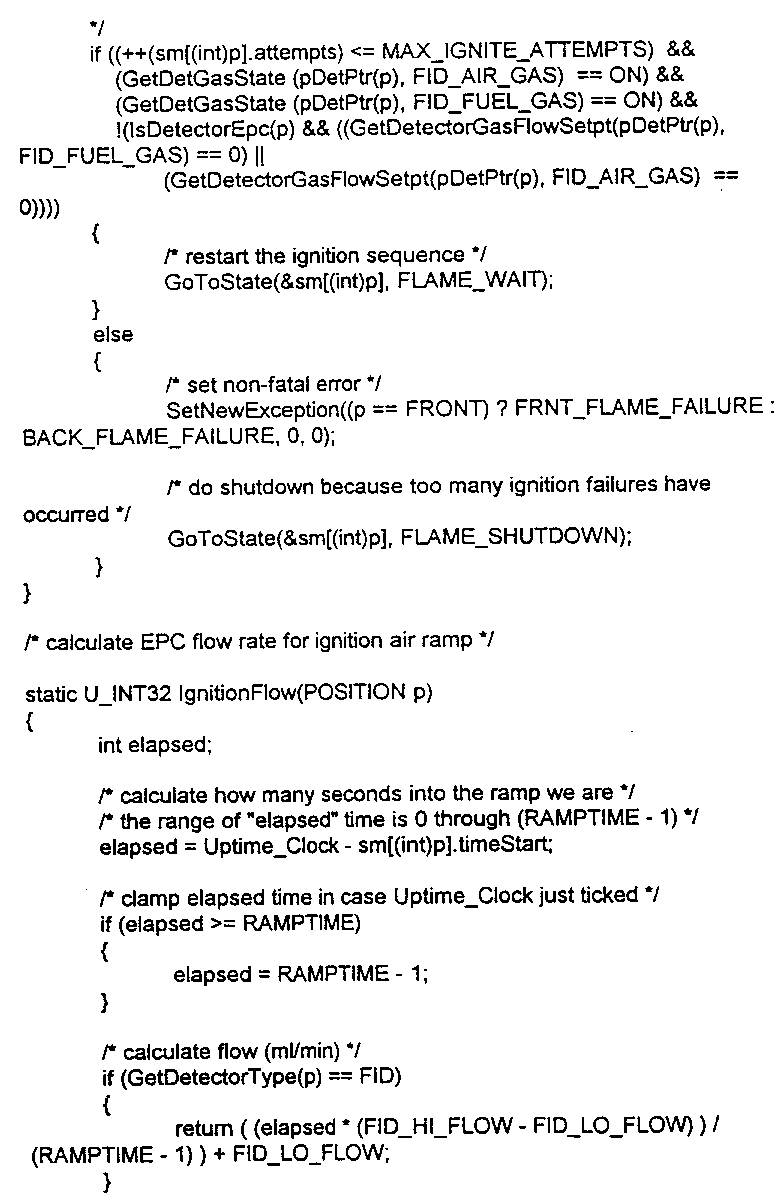

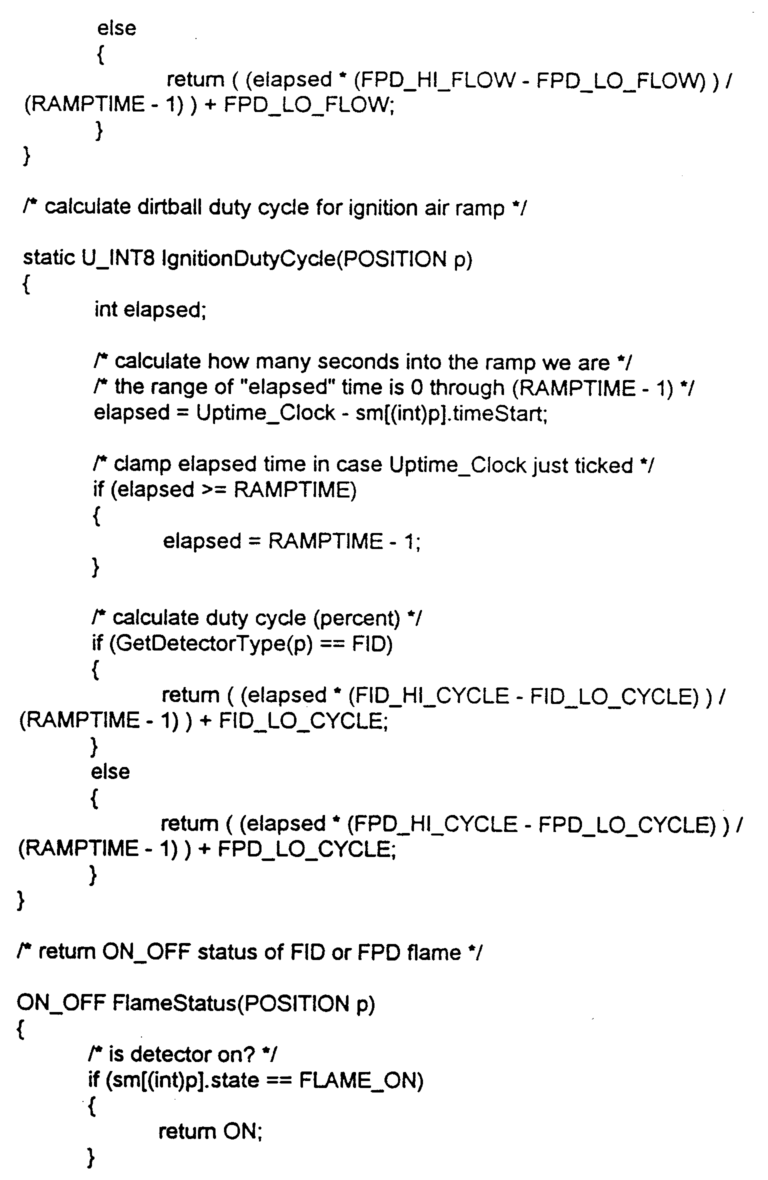

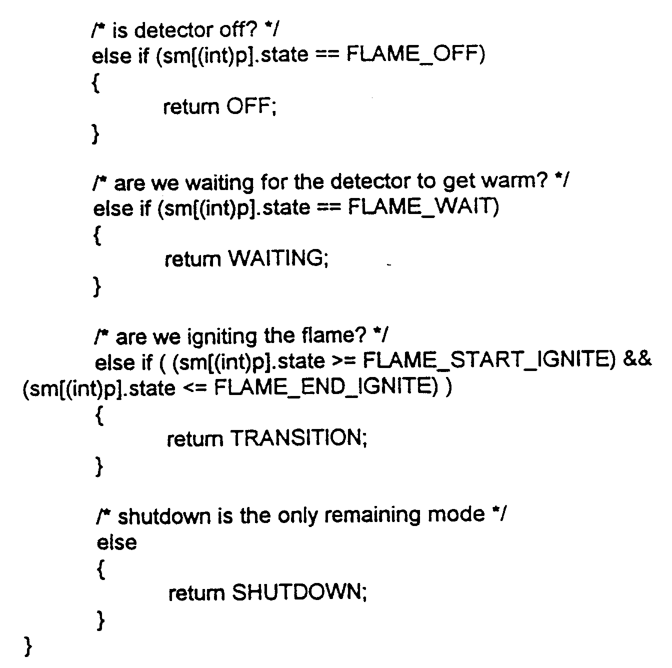

## Claims

1. An analytical instrument for detecting the presence of an analyte in a first fluid, comprising:
a pneumatic manifold (13) and a pneumatic controller (26), responsive to a first control signal, for providing a selectable fluid flow of at least one of a plurality of fluids;
a flame-based detector (24), operably connected to the pneumatic manifold (13) for receiving said selected fluid flow and for providing a detector output signal in response to said fluid flow, said flame-based detector including an igniter (211) for igniting said fluid;
an igniter circuit (115), responsive to a second control signal, for providing selectable ignition power to the igniter (211);
a programmable computer (22), operably connected to the pneumatic controller (26), the flame-based detector (24), and the igniter circuit (115), for receiving said detector output signal and determining a detector output signal level, and for providing said first and second control signals according to a predetermined ignition sequence, wherein said ignition sequence is effected according to the determination of the detector output signal level.

2. The analytical instrument of claim 1, wherein the computer (22) includes means for determining a reference detector output signal level and an actual detector output signal level, and wherein said ignition sequence is effected according to a determination that the actual detector output signal level exceeds the reference detector output signal level.

3. The analytical instrument of claim 2, wherein said second control signal is provided according to a determination that the actual detector output signal level exceeds the reference detector output signal level by a predetermined lit offset value.

4. The analytical instrument of claim 1, wherein the computer (22) includes a programmable detector ignition control table, and wherein the ignition sequence is provided according to the detector ignition control table.

5. The analytical instrument of claim 1, wherein the flame-based detector (24) is a FID and the plurality of fluids includes a first detector fluid that includes hydrogen gas.

6. The analytical instrument of claim 1, wherein the flame-based detector (24) is a FPD, and the plurality of fluids includes air.

7. The analytical instrument of claim 1, wherein the igniter circuit (115) further comprises a power converter for providing isolated power to the igniter.

8. The analytical instrument of claim 1, wherein the computer (22) includes means for recording a value representative of an ignition failure, means for determining if the recorded value exceeds a predetermined value, and means for providing a detector shutdown mode in response to said determination.

9. An analytical method, comprising the steps of:
providing a selectable flow of a plurality of fluids to a flame-based detector, said detector providing a detector output signal;
effecting an ignition of at least one of the fluids, wherein the ignition is provided according to predetermined ignition sequence, and wherein said sequence includes a step of performing a determination of a detector output signal level, and a step of controlling said ignition according to the results of the detector output signal level determination.
